# EUROPEAN PATENT SPECIFICATION

(11) **EP 0 367 383 B1**
(45) Date of publication and mention of the grant of the patent: **21.12.1994**
(21) Application number: 89308391.5
(22) Date of filing: 18.08.1989
(51) Int. Cl.: F01N 3/22

(54) **Reed valve device with air control valve**
Lamellenventilvorrichtung mit Luftregelungsventil
Dispositif de soupape à lamelles comportant une vanne de regulation d'air

(30) Priority: 04.11.1988 JP 144133/88 U
(43) Date of publication of application: 09.05.1990
(73) Proprietor: NOK CORPORATION, Tokyo 105 (JP)
(72) Inventor: Nakao, Hitoshi, Fujisawa-shi Kanagawa-ken (JP); Shigekawa, Hideo, Fujisawa-shi Kanagawa-ken (JP); Tohjima, Hidenori, Fujisawa-shi Kanagawa-ken (JP)
(74) Representative: Jenkins, Peter David

(56) References cited:
- JP-A-63 139 378
- US-A- 4 162 613
- US-A- 4 165 611
- US-A- 4 534 173

## Description

The present invention relates to a reed valve device with an air control valve and, more particularly, to a reed valve device with an air control valve improved to reduce noise which is generated during opening and closing of the reed valve.

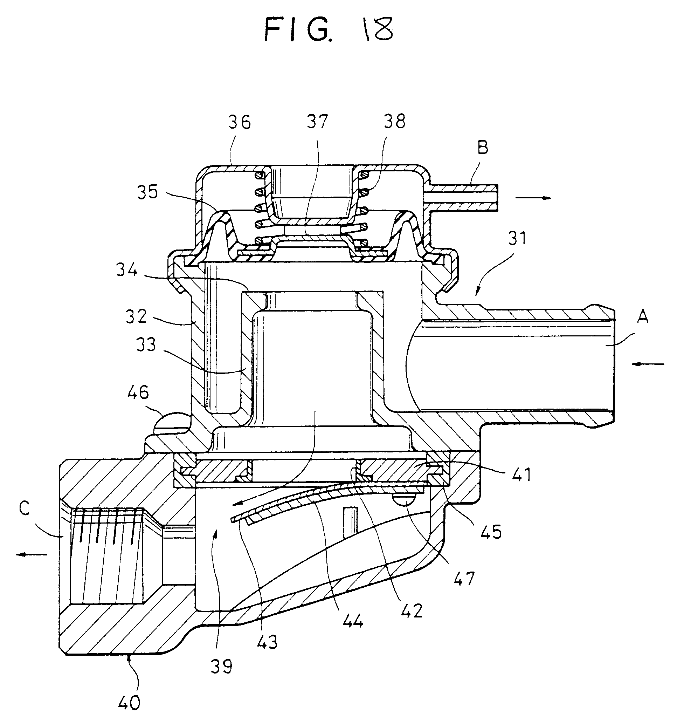

JP-A-63139378 discloses a reed valve device which has an air control valve for introducing secondary air for the purpose of cleaning exhaust gas from an automotive engine as recited in the preamble of claim 1. Such a known reed valve device has a construction as shown in Figs. 17 and 18.

Referring to these Figures, the known reed valve device has an outer cylinder 32 provided with a fluid inlet port A to which is connected a rubber hose (not shown) leading from an air cleaner (not shown). The outer cylinder 32 accommodates an inner cylinder 33 the upper end of which provides a valve seat 34 which cooperates with a diaphragm 35. The lower ends of the inner cylinder 33 and the outer cylinder 32 are connected to each other so that these cylinders in combination provide an upper casing 31. The diaphragm 35 of a disk-like form is provided between the upper ends of the inner and outer cylinders 33, 32 of the upper casing 31. A cover member 36 provided on the diaphragm 35 has a substantially cylindrical form closed at its upper end. The central portion of the upper wall of the cover member 36 is recessed downward in a cylindrical form. A port B is provided in the peripheral wall of the cover member 36. The diaphragm 35 is clamped at its peripheral edge portion between the edge of the lower opening of the cover member 36 and the edge of the upper opening of the outer cylinder 32. A disk-shaped closure member 37 is embedded in the central portion of the diaphragm 35.

A coiled spring 38 is loaded between the closure member 37 and the cover member 36 so as to bias the diaphragm 35 to keep it seated on the valve seat 34.

A reed valve 39 is disposed on the lower end of the opening of the outer cylinder 32 of the upper casing 31. A lower casing 40 having a fluid outlet port C is secured to the lower end of the upper casing 31 by means of screws 46. Thus, the interior of the upper casing 31 and the interior of the lower casing 40 are communicatable through the reed valve 39.

As in the case of ordinary reed valve, the reed valve 39 has a case complete 41 provided with a fluid passage hold 42 formed in the center thereof, a reed 43 capable of selectively closing the passage hole 42 in accordance with the pressure differential developed across the reed 43, and a stopper 44 for limiting the lift of the reed 43, the case complete 41, the reed 43 and the stopper 44 being assembled together by means of a screw 47. The reed valve 39 is fixed at its peripheral portion between the upper casing 31 and the lower casing 40 through the intermediary of a holding member 45 provided on the periphery of the case complete 41.

In this reed valve device with air control valve, when no signal pressure is applied to the port B, the diaphragm 35 is seated on the valve seat 34 by the biasing force of the coiled spring 38 as shown in Fig.17, so that a fluid flowing into the port A is prevented from flowing into the interior of the inner cylinder 33 and, hence, from being relieved through the port C.

However, when a signal pressure is applied to the port 3, the diaphragm 35 is displaced, by this signal pressure, away from the valve seat 34 overcoming the force of the coiled spring 38 as shown in Fig. 18. In this state, a fluid flowing into the port A is allowed to flow into the inner cylinder 33 through the clearance between the diaphragm 35 and the valve seat 34 and reaches the reed valve 39. In consequence, the reed valve 39 is forcibly opened by the pressure differential between the interior of the inner cylinder and the port C so as to allow the fluid to be discharged through the port C.

Any reversing flow of the fluid into and through the port C is prevented because the reed 44 of the reed valve 39 closes the passage hole 42 in the case complete 43 so as to block such reversing flow of the fluid.

During the operation of the reed valve device as described, noise is generated in the reed valve 39 as a result of vibratory opening and closing motion of the reed 43. The noise is propagated tracing backward the path of the fluid, i.e., upwardly through the inner cylinder 33, the clearance between the valve seat 34 and the diaphragm 35, port A and through the rubber hose to reach the air cleaner.

The noise is then made to pass through filter elements packed in the air cleaner so as to interfere with each other to reduce their levels, whereby the transmission of the noise to the interior of the compartment is appreciably reduced.

This known reed valve device with air control valve, however, suffers from the following disadvantages.

The reduction of the noises generated in the reed valve device is achieved by allowing the noise to propagate to the air cleaner and causing the noise components to interfere with one another. The noise components, however, tend to cause an air columnar resonance in the rubber hose through which the noise components are propagated, so that the level of the noise reaching the air cleaner may have been increased as compared with the level of the noise originally generated in the treed valve device.

In addition, components of the noise which have been leaked from the air cleaner is transmitted into the compartment to discomfort the driver and/or passengers.

If the rubber hose has accidentally come off, the noise is directly transmitted into the compartment.

The present invention aims to provide a reed valve device with an air control valve, improved to enable reduction of noise generated in the reed valve device before the noise is propagated to the exterior.

The present invention also aims to provide a reed valve device which is capable of preventing transmission of the noise from the reed valve device into the compartment regardless of whether the rubber hose has come off or not.

To this end, according to the present invention, there is provided a reed valve device with an air control valve comprising:
an upper casing including an outer cylinder provided with a fluid inlet port, and inner cylinder disposed in said outer cylinder, a gap between the lower ends of said outer and inner cylinders being closed; a lower casing provided with a fluid outlet port; a reed valve provided between said upper casing and said lower casing, the interior of said upper casing and the interior of said lower casing being communicatable through said reed valve; a diaphragm placed on the upper ends of said outer and inner cyclinders; a cover member having a signal pressure port formed therein and provided on said diaphragm, said diaphragm being clamped at its peripheral edge portion between said cover member and said outer cylinder; a coiled spring disposed between said cover member and said diaphragm so as to bias said diaphragm into seating contact with a valve seat provided by the upper end of said inner cylinder; wherein a signal pressure applied to said signal pressure port produces a force to deflect said diaphragm against the biasing force of said coiled spring away from said valve seat so as to allow a fluid introduced through said fluid inlet port to reach said reed valve through the space between said outer and inner cylinders and through the interior of said inner cylinder; characterised in that a filter is disposed in the portion of the fluid passage defined between said outer and inner cylinders confronting said fluid inlet port.

With this arrangement, noise generated during operation of the reed valve is prevented from directly propagating back to the fluid inlet port. Namely, the noise travels a long distance inside the reed valve device before it reaches the fluid inlet port.

Thus, transmission of large noise to the compartment is prevented even when the rubber hose has accidentally come off.

Preferably, the present invention further comprises a partition wall which connects said outer cylinder and said inner cylinder so as to cause a fluid from said inlet port to flow horizontally.

Preferably, the upper suface of said filter contacts said partition wall, so that the fluid from the inlet port flows horizontally through the filter.

Preferably, said partition wall has a sector-shape and is provided to connect said outer and inner cylinders at the same side as said fluid inlet port and at a level above said fluid inlet port.

Preferably, said fluid inlet port and said fluid outlet port are oriented in the same direction.

Preferably, said fluid inlet port and said fluid outlet port are oriented in orthogonal directions.

Preferably, the interior of said lower casing is divided into two sections and wherein a pair of said outlet ports are provided to correspond to said two sections.

Embodiments of the present invention will now be described by way of example only with reference to the accompanying drawings, in which:-
FIG. 1 is a schematic vertical sectional view of the first embodiment of the reed valve device with air control valve in accordance with the present invention in an inoperative state;
FIG. 2 is a schematic vertical sectional view of the first embodiment in an operative state;
FIG. 3 is a plan view of a second embodiment;
FIG. 4 is a side elevational view as viewed from one side of the second embodiment;
FIG. 5 is a side elevatonal view as viewed from the other side of the second embodiment;
FIG. 6 is a schematic vertical sectional view;
FIG. 7 is a sectional view taken along the line III-III of Fig. 6;
FIG. 8 is a plan view of a third embodiment;
FIG. 9 is a side elevational view of the third embodiment;
FIG. 10 is a schematic vertical sectional view of the third embodiment;
FIG. 11 is a sectional view taken along the line IV-IV of Fig. 10;
FIG. 12 is a plan view of a fourth embodiment;
FIG. 13 is a side elevational view of the fourth embodiment;
FIG. 14 is a schematic vertical sectional view of the fourth embodiment;
FIG. 15 is a sectional view taken along the line V-V of Fig. 14;
FIG. 16 is a sectional view taken along the line VI-VI of Fig. 15;
FIG. 17 is a schematic vertical sectional view of a known reed valve device with air control valve in inoperative state; and
FIG. 18 is a schematic vertical sectional view of the reed valve device of Fig. 17 in an operating state.

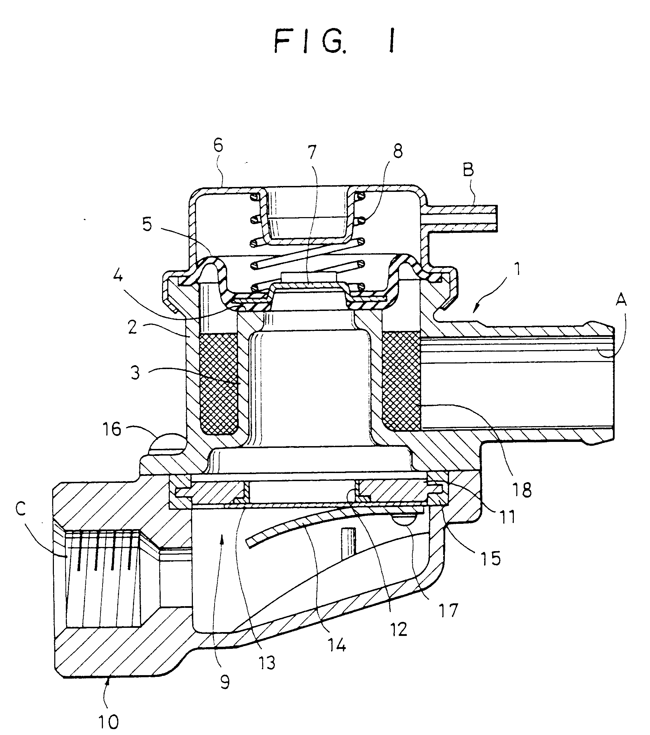

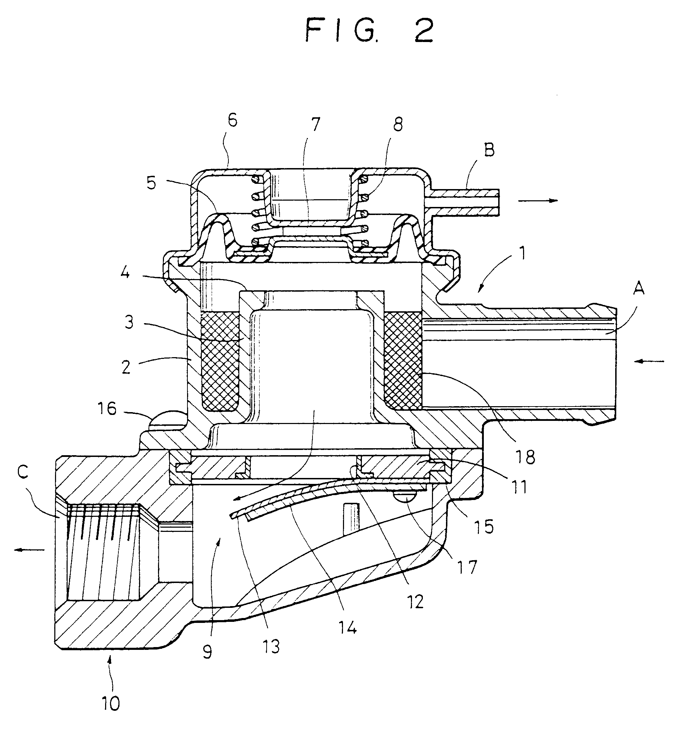

Figs. 1 and 2 show a first embodiment of the reed valve device with an air control device in accordance with the present invention.

Referring to these Figures, the reed valve device has an outer cylinder 2 provided in its side wall with a fluid inlet port A to which is connected a rubber hose (not shown) leading from an air cleaner (not shown). The outer cylinder 2 accommodates an inner cylinder 3 the upper end of which provides a valve seat 4 which cooperates with a diaphragm 5. The lower ends of the inner cylinder 3 and the outer cylinder 2 are connected to each other so that these cylinder in cooperation provide an upper casing 1.

The diaphragm 5, having a disk-like form, is provided on the upper end of the outer cylinders 2 of the upper casing 1. A cover member 6 provided on the diaphragm 5 has a substantially cylindrical form closed at its upper end. The central portion of the upper wall of the cover member 6 is recessed to project downward in a cylindrical form. A port B is provided in the peripheral wall of the cover member 6. The diaphragm 5 is clamped at its peripheral edge portion between the edge of the lower opening of the cover member 6 and the edge of the upper opening of the outer cylinder 2. A disk-shaped closure member 7 is embedded in the central portion of the diaphragm 5.

A coiled spring 8 is loaded between the closure member 7 and the cover member 6 so as to bias the diaphragm 5 to keep it seated on the valve seat 4.

A filter 18 is disposed in a space defined between the outer cylinder 2 and the inner cylinder 3 within the upper casing 1.

The filter 18 can have various types of filtering material, though the illustrated embodiment employs filter elements formed from chemical fibers.

A reed valve 9 is disposed on the lower end of the opening of the outer cylinder 2 of the upper casing 1. A lower casing 10 having a fluid outlet port C is secured to the lower end of the upper casing 1 by means of screws 16. Thus, the interior of the upper casing 1 and the interior of the lower casing 10 are communicatable through the reed valve 9.

The reed valve 9 in the present invention has a case complete 11 provided with a fluid passage hole 12 formed in the center thereof, a reed 13 capable of selectively closing the passage hole 12 in accordance with the pressure differential developed across the reed 13, and a stopper 14 for limiting the lift of the reed 13, the reed 13 and the stopper 14 being together secured to the case complete 11 by means of a screw 17. The reed valve 9 is fixed at its peripheral portion between the upper casing 1 and the lower casing 10 through the intermediary of a holding member 15 provided on the periphery of the case complete 11.

In the operation of this reed valve device with air control valve, when no signal pressure is applied to the port B, the diaphragm 5 is seated on the valve seat 4 by the biasing force of the coiled spring 8 as shown in Fig. 1, so that a fluid flowing into the port A is prevented from flowing into the interior of the inner cylinder 3 and, hence, from being relieved through the port C.

However, when a signal pressure is applied to the port B, the diaphragm 5 is displaced, by this signal pressure, away from the valve seat 4 overcoming the force of the coiled spring 8 as shown in Fig. 2. In this state, a fluid flowing into the port A is allowed to flow into the inner cylinder 3 through the clearance between the diaphragm 5 and the valve seat 4 and reaches the reed valve 9. In consequence, the reed valve 9 is forcibly opened by the pressure differential between the interior of the inner cylinder 3 and the outlet port C so as to allow the fluid to be discharged through the port C.

Any reversing flow of the fluid into and through the port C is prevented because the reed 13 of the reed valve 9 closes the passage hole 12 in the case complete 11 so as to block such reversing flow of the fluid.

During the operation of the reed valve device, noise is generated in the reed valve 9 due to vibratory opening and closing of the reed 13. The noise is propagated upward through the inner cylinder 3 and reach the filter 18 through the clearance between the valve seat 4 and the diaphragm 5 so that the noise is reflected and scattered in various directions upon collision with the material of the filter element, so that noise components are interfered with and negated by one on other to reduce the noise level.

Thus, in the first embodiment of the present invention, the filter 18 effectively reduce the noise generated in the reed valve 9, thus attaining a remarkable improvement in the noise reduction.

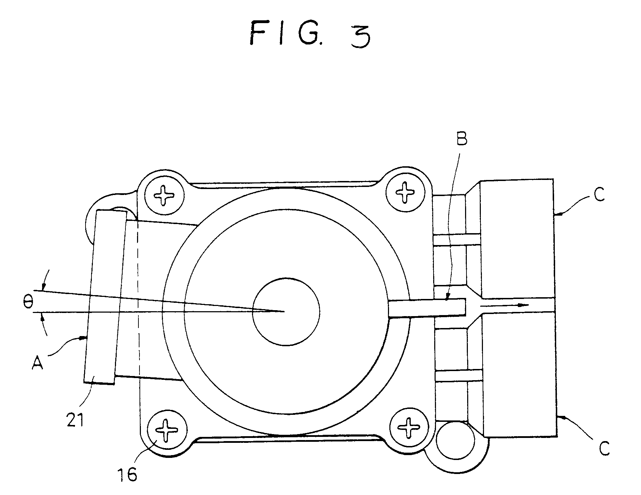

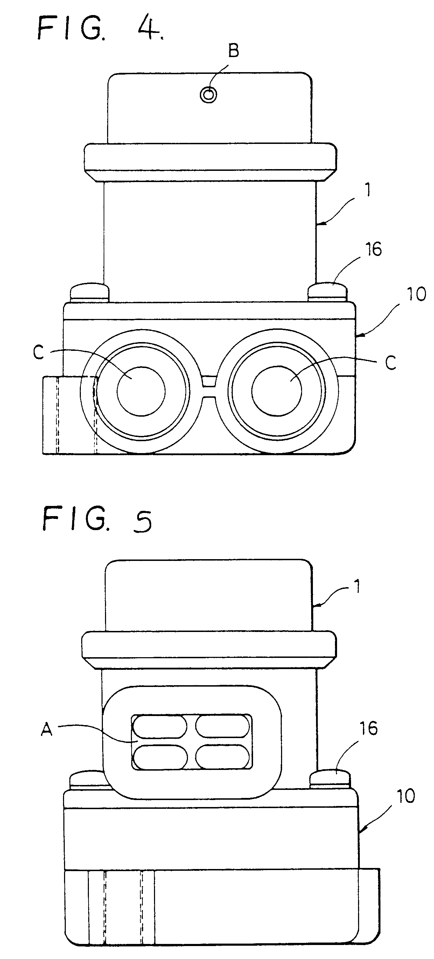

Figs. 3 to 7 show a second embodiment of the reed valve device with an air control device in accordance with the present invention.

Referring to these Figures, the reed valve device has an outer cylinder 2 provided in its side wall with a fluid inlet port A and accommodating an inner cylinder 3 the upper and of which provides a valve seat 4 which cooperates with a diaphragm 5, the lower ends of the inner cylinder 3 and the outer cylinder 2 being connected to each other so that these cylinders in cooperation provide an upper casing 1.

The diaphragm 5, having a disk-like form, is provided on the upper end of the outer cylinders 2 of the upper casing 1. A cover member 6 provided on the diaphragm 5 has a substantially cylindrical form closed at its upper end. The central portion of the upper wall of the cover member 6 is recessed downward in a cylindrical form. A port B is provided in the peripheral wall of the cover member 6. The diaphragm 5 is clamped at its peripheral edge portion between the edge of the lower end opening of the cover member 6 and the edge of the upper end opening of the outer cylinder 2.

A disk-shaped closure member 7 is embedded in the central portion of the diaphragm 5.

A coiled spring 8 is loaded between the closure member 7 and the cover member 6 so as to bias the diaphragm 5 to keep it seated on the valve seat 4.

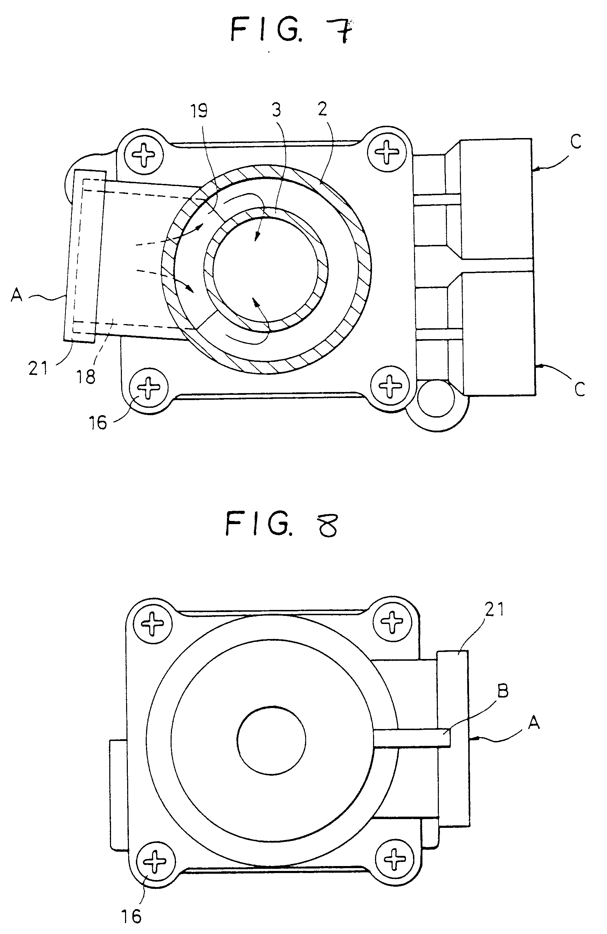

The fluid inlet port A is formed such that its axis is inclined within the horizontal plate at an angle ϑ with respect to the center of the upper casing 1. As shown in Fig. 7, a sector-shaped partition wall 19 is provided to connect the outer and inner cylinders 2 and 3 at the upper side of the port A. The port A is provided with a filter 18 disposed therein, and is capped with a cap member 21 at its one end.

The fluid introduced into the port A flows into the inner cylinder 3 as indicated by arrows in Fig. 7.

A reed valve 9 having a pair of fluid passage holes 12 and a lower casing 10 having a pair of fluid outlet ports C are secured as a unit to the lower end opening of the outer cylinder 2, by means of a screw 16. The space under the passage holes 12 of the reed valve 9 is divided by a partition wall 22 provided in the lower casing 10 into sections which corresponds to the respective passage holes 12 and which lead to the respective outlet ports C.

The reed valve 9 in embodiment has a case complete 11 having the pair of fluid passage holes 12, reeds 13 capable of selectively closing the passage holes 12, and stoppers 14 for limiting the lift of the reed 13, the reeds 13 and the stoppers 14 being together secured to the case complete 11 by means of screws 17. The reed valve 9 is fixed at its peripheral portion between the upper casing 1 and the lower casing 10 through the intermediary of a holding member 15.

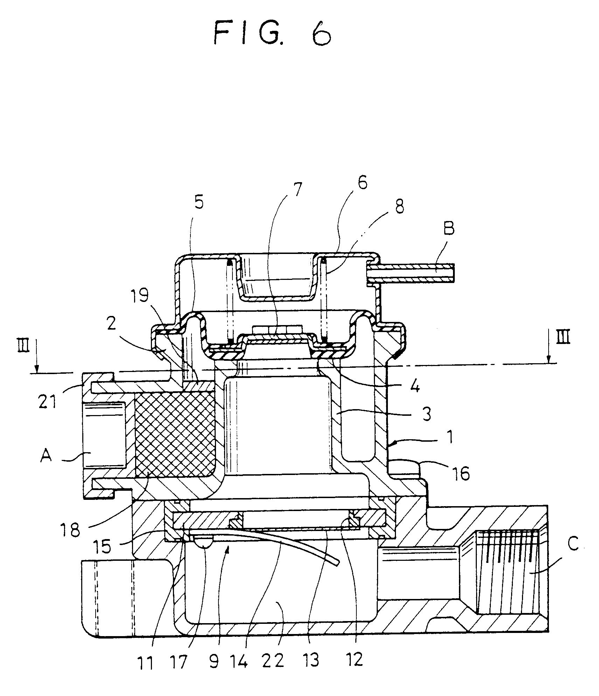

In operation this reed valve device with air control valve, when no signal pressure is applied to the port B, the diaphragm 5 is seated on the valve seat 4 by the biasing force of the coiled spring 8 as shown in Fig. 6, so that a fluid flowing into the port A is prevented from flowing into the interior of the inner cylinder 3 and, hence, from being relieved through the ports C.

However, when a signal pressure is applied to the port B, the diaphragm 5 is displaced away from the valve seat 4 overcoming the force of the coiled spring 8, by this signal pressure.

In this state, the fluid flowing into the reed valve device through the port A is made to flow through the filter 18. Since the upper surface of the filter is held in contact with the partition wall 19, the flow of the fluid is deflected horizontally and is allowed to flow upward in the region where the partition wall 19 does not exist so as to flow into the inner cylinder 3. The fluid then flows downward through the inner cylinder 3 so as to forcibly open the reeds 13 and is discharged through the respective ports C.

Any reversing flow of the fluid into and through the port C is prevented because the reeds 13 of the reed valve 9 closes the passage holes 12 in the case complete 11 so as to block such reversing flow of the fluid.

During the operation of the reed valve device, noise is generated in the reed valve 9 due to vibratory opening and closing of the reed 13. The noise is propagated in the direction counter to the direction of flow of the fluid, namely, upward through the inner cylinder 3 , the gap between the upper side of the valve seat 4 an the diaphragm 5, and the space between the outer cylinder 2 and the inner cylinder 3, so as to reach the port A. The filter 18 provided in the port A remarkably reduced the noise. Replacement of the filter 18 can be conducted without difficulty, by removing the cap 21.

Figs. 8 to 11 show a third embodiment of the reed valve device with an air control device in accordance with the present invention.

Referring to these Figures, the reed valve device has an outer cylinder 2 provided in its side wall with a fluid inlet port A and accommodating an inner cylinder 3 the upper end of which provides a valve seat 4 which cooperates with a diaphragm 5, the lower ends of the inner cylinder 3 and the outer cylinder 2 being connected to each other so that these cylinders in cooperation provide an upper casing 1.

The diaphragm 5 of a disk-like form is provided on the upper end of the outer cylinders 2 of the upper casing 1. A cover member 6 provided on the diaphragm 5 has a substantially cylindrical form closed at its upper end. The central portion of the upper wall of the cover member 6 is recessed downward in a cylindrical form. A port B is provided in the peripheral wall of the cover member 6. The diaphragm 5 is clamped at its peripheral edge portion between the edge of the lower end opening of the cover member 6 and the edge of the upper end opening of the outer cylinder 2.

A disk-shaped closure member 7 is embedded in the central portion of the diaphragm 5.

A coiled spring 8 is loaded between the closure member 7 and the cover member 6 so as to bias the diaphragm 5 to keep it seated on the valve seat 4.

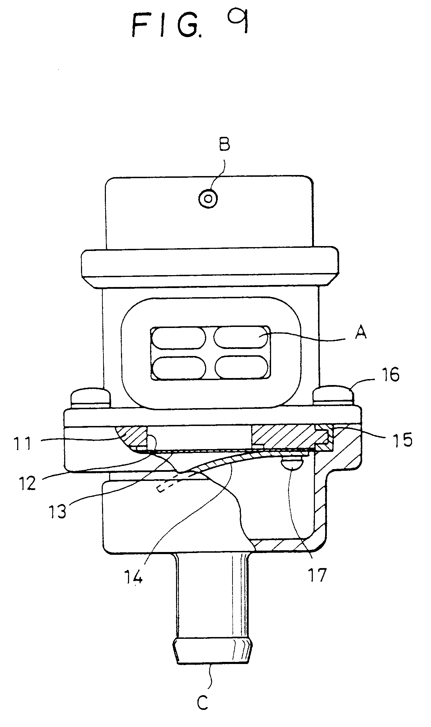

As shown in Fig. 9, a sector-shaped partition wall 19 is provided to connect the outer and inner cylinders 2 and 3 at the upper side of the port A. The port A is provided with a filter 18 disposed therein, and is capped with a cap member 21 at its one end.

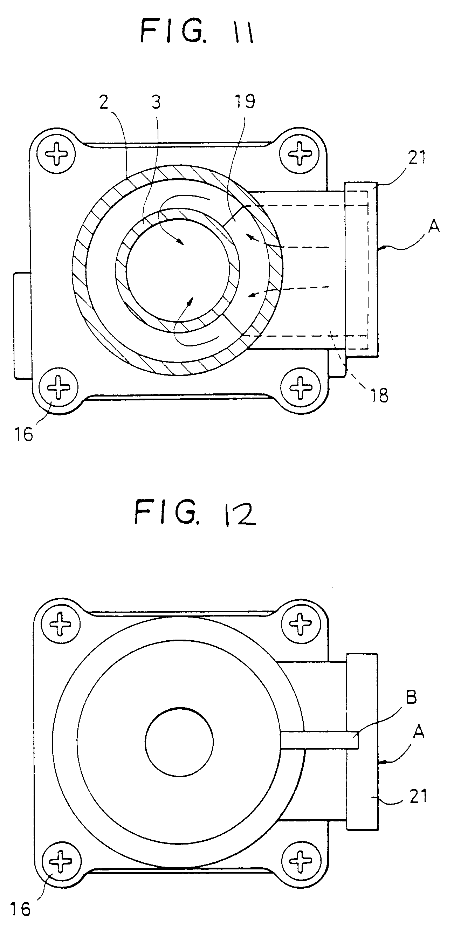

The fluid introduced into the port A flows into the inner cylinder 3 as indicated by arrows in Fig. 11.

A reed valve 9 having a pair of fluid passage holes 12 and a lower casing 10 having a pair of fluid outlet ports C are secured as a unit to the lower end opening of the outer cylinder 2, by means of a screw 16. The space under the passage holes 12 of the reed valve 9 is divided by a partition wall 22 provided in the lower casing 10 into sections which corresponds to the respective passage holes 12 and which lead to the respective outlet ports C.

The ports C are arranged orthogonally to the ports A and B.

The reed valve 9 in this embodiment has a case complete 11 having the pair of fluid passage holes 12, reeds 13 capable of selectively closing the passage holes 12, and stoppers 14 for limiting the lift of the reed 13, the reeds 13 and the stoppers 14 being together secured to the case complete 11 by means of screws 17. The reed valve 9 is fixed at its peripheral portion between the upper casing 1 and the lower casing 10 through the intermediary of a holding member 15.

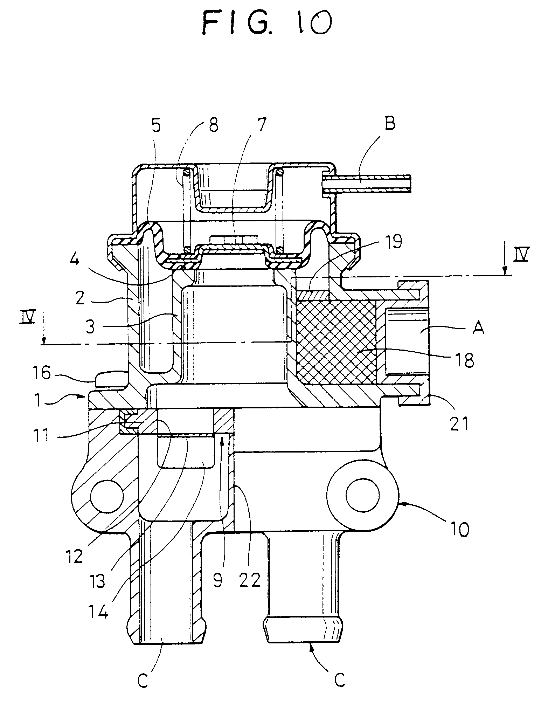

In operation of this reed valve device with air control valve, when no signal pressure is applied to the port B, the diaphragm 5 is seated on the valve seat 4 by the biasing force of the coiled spring 8 as shown in Fig. 10, so that a fluid flowing into the port A is prevented from flowing into the interior of the inner cylinder 3 and, hence, from being relieved through the ports C.

However, when a signal pressure is applied to the port B, the diaphragm 5 is displaced away from the valve seat 4 overcoming the force of the coiled spring 8, by this signal pressure.

In this state, the fluid flowing into the reed valve device through the port A is made to flow through the filter 18. Since the upper surface of the filter is held in contact with the partition wall 19, the flow of the fluid is deflected horizontally and is allowed to flow upward in the region where the partition wall 19 does not exist, so as to flow into the inner cylinder 3. The fluid then flows downward through the inner cylinder 3 so as to forcibly open the reeds 13 and is discharged through the respective ports C.

Any reversing flow of the fluid into and through the port C is prevented because the reeds 13 of the reed valve 9 closes the passage holes 12 in the case complete 11 so as to block such reversing flow of the fluid.

During the operation of the reed valve device, noises are generated in the reed valve 9 due to vibratory opening and closing of the reed 13. The noises are propagated in the direction counter to the direction of flow of the fluid, namely, upward through the inner cylinder 3 , the gap between the upper side of the valve seat 4 an the diaphragm 5, and the space between the outer cylinder 2 and the inner cylinder 3, so as to reach the port A. The filter 18 provided in the port A remarkably reduced the noise. Replacement of the filter 18 can be conducted without difficulty, by removing the cap 21.

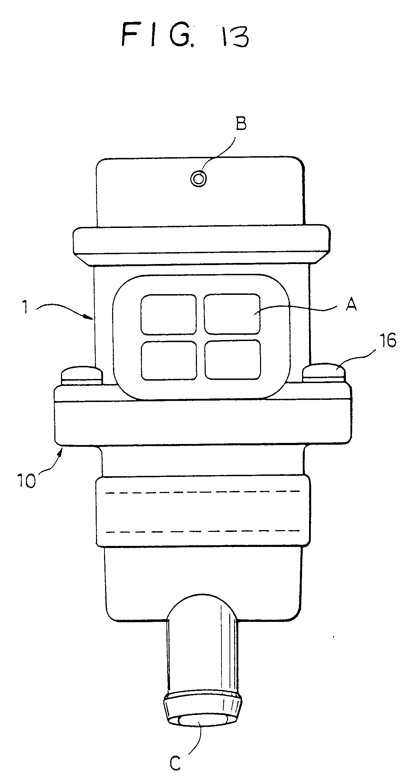

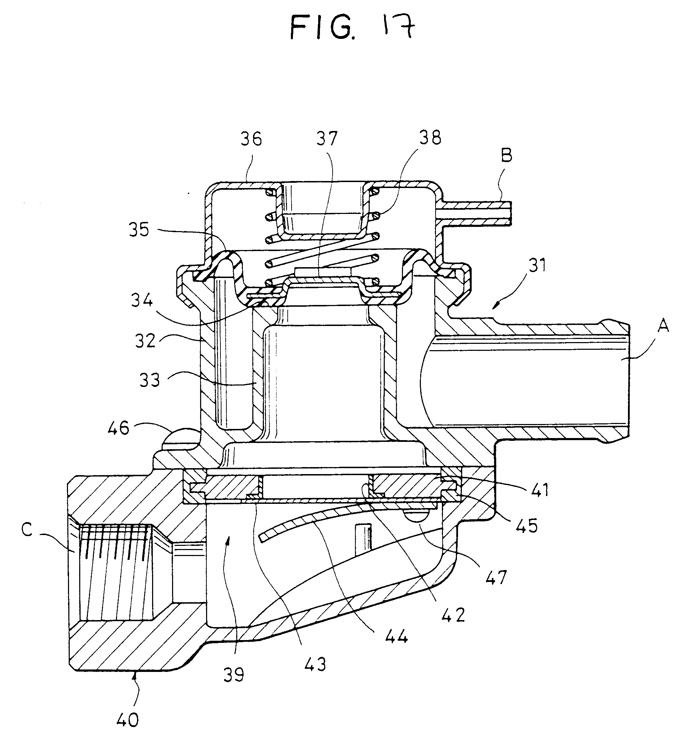

Figs. 12 to 16 show a fourth embodiment of the reed valve device with an air control device in accordance with the present invention.

Referring to these Figures, the reed valve device has an outer cylinder 2 provided in its side wall with a fluid inlet port A and accommodating an inner cylinder 3 the upper end of which provides a valve seat 4 which cooperates with a diaphragm 5, the lower ends of the inner cylinder 3 and the outer cylinder 2 being connected to each other so that these cylinders in cooperation provide an upper casing 1.

The diaphragm 5, having a disk-like form, is provided on the upper end of the outer cylinders 2 of the upper casing 1. A cover member 6 provided on the diaphragm 5 has a substantially cylindrical form closed at its upper end. The central portion of the upper wall of the cover member 6 is recessed downward in a cylindrical form. A port B is provided in the peripheral wall of the cover member 6. The diaphragm 5 is clamped at its peripheral edge portion between the edge of the lower end opening of the cover member 6 and the edge of the upper end opening of the outer cylinder 2.

A disk-shaped closure member 7 is embedded in the central portion of the diaphragm 5.

A coiled spring 8 is loaded between the closure member 7 and the cover member 6 so as to bias the diaphragm 5 to keep it seated on the valve seat 4.

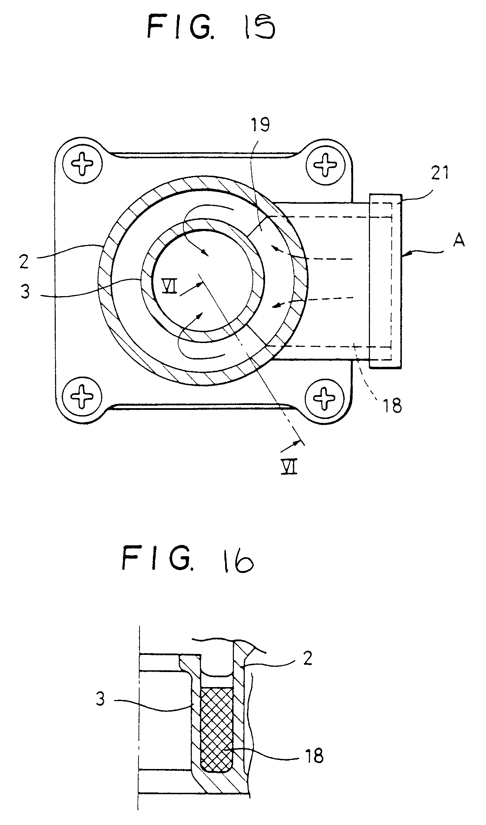

As shown in Fig. 15, a sector-shaped partition wall 19 is provided to connect the outer and inner cylinders 2 and 3 at the upper side of the port A. The port A is provided with a filter 18 disposed therein, and is capped with a cap member 21 at its one end.

The fluid introduced into the port A flows into the inner cylinder 3 as indicated by arrows in Fig. 15.

A reed valve 9 having a pair of fluid passage holes 12 and a lower casing 10 having a pair of fluid outlet ports C arranged in Y-like form are secured as a unit to the lower end opening of the outer cylinder 2, by means of a screw 16.

Thus, the interior of the upper casing 1 and the interior of the lower case 10 are communicatable through the read valve 9.

The reed valve 9 has a V-shaped case complete 11 having fluid passage ports 12 formed in both side surfaces thereof, reed capable of selectively closing the passage holes 12, and stoppers 14 capable of limiting the lift of the reeds 13, the reeds 13 and the stoppers 14 being together secured to the case complete 11 by a screw 17.

The reed valve 9 is secured between the upper casing 1 and the lower casing 10 through a holding member 15.

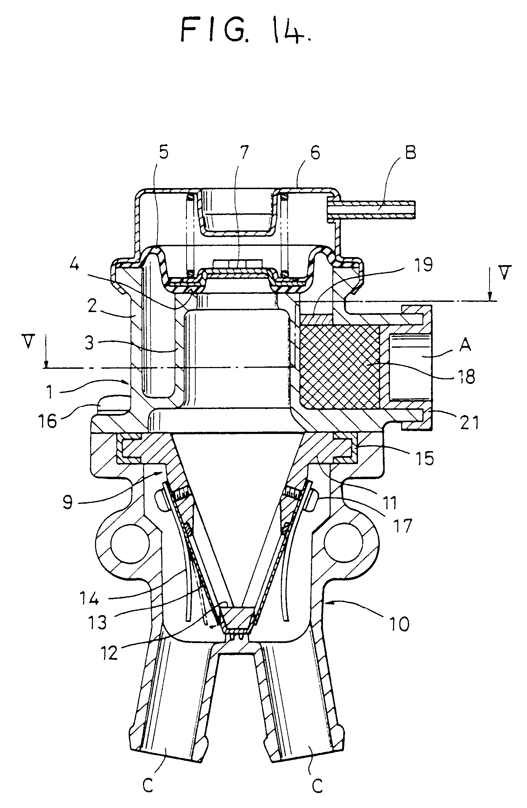

In operation of this reed valve device with air control valve, when no signal pressure is applied to the port B, the diaphragm 5 is seated on the valve seat 4 by the biasing force of the coiled spring 8 as shown in Fig. 14, so that a fluid flowing into the port A is prevented from flowing into the interior of the inner cylinder 3 and, hence, from being relieved through the ports C.

However, when a signal pressure is applied to the port B, the diaphragm 5 is displaced away from the valve seat 4 overcoming the force of the coiled spring 8, by this signal pressure.

In this state, the fluid flowing into the reed valve device through the port A is made to flow through the filter 18. Since the upper surface of the filter is held in contact with the partition wall 19, the flow of the fluid is deflected horizontally and is allowed to flow upward in the region where the partition wall 19 does not exist, so as to flow into the inner cylinder 3. The fluid then flows downward through the inner cylinder 3 so as to forcibly open the reeds 13 and is discharged through the respective ports C.

Any reversing flow of the fluid into and through the port C is prevented because the reeds 13 of the reed valve 9 closes the passage holes 12 in the case complete 11 so as to block such reversing flow of the fluid.

During the operation of the reed valve device, noises are generated in the reed valve 9 due to vibratory opening and closing of the reed 13. The noises are propagated in the direction counter to the direction of flow of the fluid, namely, upward through the inner cylinder 3 , the gap between the upper side of the valve seat 4 an the diaphragm 5, and the space between the outer cylinder 2 and the inner cylinder 3, so as to reach the port A. The filter 18 provided in the port A remarkably reduced the noise. Replacement of the filter 18 can be conducted without difficulty, by removing the cap 21.

## Claims

1. A reed valve device with an air control valve comprising:
an upper casing including an outer cylinder (2) provided with a fluid inlet port (A), and inner cylinder (3) disposed in said outer cylinder (2), a gap between the lower ends of said outer (2) and inner (3) cylinders being closed;
a lower casing (10) provided with a fluid outlet port (C);
a reed valve (9) provided between said upper casing (1) and said lower casing (10), the interior of said upper casing (1) and the interior of said lower casing (10) being communicatable through said reed valve (9);
a diaphragm (5) placed on the upper ends of said outer (2) and inner (3) cyclinders;
a cover member (6) having a signal pressure port formed therein and provided on said diaphragm (5), said diaphragm (5) being clamped at its peripheral edge portion between said cover member (6) and said outer cylinder (2);
a coiled spring (8) disposed between said cover member (6) and said diaphragm (5) so as to bias said diaphragm (5) into seating contact with a valve seat (4) provided by the upper end of said inner cylinder (3);
wherein a signal pressure applied to said signal pressure port (B) produces a force to deflect said diaphragm (5) against the biasing force of said coiled spring (8) away from said valve seat (4) so as to allow a fluid introduced through said fluid inlet port (A) to reach said reed valve (9) through the space between said outer (2) and inner (3) cylinders and through the interior of said inner cylinder (3);
characterised in that a filter (18) is disposed in the portion of the fluid passage defined between said outer (2) and inner (3) cylinders confronting said fluid inlet port (A).

2. A reed valve device according to claim 1, further comprising a partition wall (19) which connects said outer cylinder (2) and said inner cylinder (3) so as to cause a fluid from said inlet port (A) to flow horizontally.

3. A reed valve device according to claim 2 wherein the upper suface of said filter (18) contacts said partition wall (19), so that the fluid from the inlet port (A) flows horizontally through the filter (18).

4. A reed valve device according to claim 2 or claim 3, wherein said partition wall (19) has a sector-shape and is provided to connect said outer (2) and inner (3) cylinders at the same side as said fluid inlet port (A) and at a level above said fluid inlet port (A).

5. A reed valve device according to any foregoing claim, wherein said fluid inlet port (A) and said fluid outlet port (C) are oriented in the same direction.

6. A reed valve device according to any one of claims 1 to 4, wherein said fluid inlet port (A) and said fluid outlet port (C) are oriented in orthogonal directions.

7. A reed valve device according to any foregoing claim, wherein the interior of said lower casing (10) is divided into two sections and wherein a pair of said outlet ports (C) are provided to correspond to said two sections.

## Patentansprüche

1. Lamellenventilvorrichtung mit einem Luftsteuerventil, mit
einem oberen Gehäuse, das einen äußeren Zylinder (2) umfaßt, der mit einer Strömungsmitteleinlaßöffnung (A) versehen ist, und einen inneren Zylinder (3), der im genannten äußeren Zylinder (2) angeordnet ist, wobei ein Spalt zwischen den unteren Enden des genannten äußeren (2) und inneren (3) Zylinders geschlossen ist;
einem unteren Gehäuse (10), das mit einer Strömungsmitteleinlaßöffnung (C) versehen ist;
einem Lamellenventil (9), das zwischen dem genannten oberen Gehäuse (1) und dem genannten unteren Gehäuse (10) vorgesehen ist, wobei das Innere des genannten oberen Gehäuses (1) und das Innere des genannten unteren Gehäuses (10) durch das genannte Lamellenventil (9) in Verbindung bringbar sind;
einer Membran (5), die an den oberen Enden des genannten äußeren (2) und inneren (3) Zylinders angeordnet ist;
einem Abdeckteil (6) mit einer Signaldrucköffnung, die hierin ausgebildet ist, und das an der genannten Membran (5) vorgesehen ist, wobei die genannte Membran (5) an ihrem Umfangskantenabschnitt zwischen dem genannten Abdeckteil (6) und dem genannten äußeren Zylinder (2) festgeklemmt ist;
einer spiraligen Feder (8), die zwischen dem genannten Abdeckteil (6) und der genannten Membran (5) angeordnet ist, um die genannte Membran (5) in Sitzberührung mit einem Ventilsitz (4) zu drücken, der vom oberen Ende des genannten inneren Zylinders (3) gebildet ist;
worin ein Signaldruck, der an der genannten Signaldrucköffnung (B) angelegt wird, eine Kraft erzeugt, um die genannte Membran (5) gegen die Spannkraft der genannten spiraligen Feder (8) vom genannten Ventilsitz (4) weg so zu verformen, daß es einem Strömungsmittel, das durch die genannte Strömungsmitteleinlaßöffnung (A) eingeleitet wird, gestattet ist, das genannte Lamellenventil (9) durch den Raum zwischen dem genannten äußeren (2) und inneren (3) Zylinder und durch das Innere des genannten inneren Zylinders (3) zu erreichen;
dadurch **gekennzeichnet**, daß ein Filter (18) im Abschnitt des Strömungsmittelkanals angeordnet ist, der zwischen dem genannten äußeren (2) und inneren (3) Zylinder gebildet ist, der der genannten Strömungsmitteleinlaßöffnung (A) zugewandt ist.

2. Lamellenventilvorrichtung nach Anspruch 1, ferner mit einer Unterteilungswand (19), die den genannten äußeren Zylinder (2) und den genannten inneren Zylinder (3) verbindet, um ein Strömungsmittel aus der genannten Einlaßöffnung (A) zu veranlassen, horizontal zu strömen.

3. Lamellenventilvorrichtung nach Anspruch 2, worin die obere Fläche des genannten Filters (18) die genannte Unterteilungswand (19) so berührt, daß das Strömungsmittel aus der Einlaßöffnung (A) horizontal durch das Filter (18) strömt.

4. Lamellenventilvorrichtung nach Anspruch 2 oder Anspruch 3, worin die genannte Unterteilungswand (19) sektorförmig ist und so vorgesehen ist, daß sie den genannten äußeren (2) und inneren (3) Zylinder auf derselben Seite wie die genannte Strömungseinlaßöffnung (A) und bei einem Niveau über der genannten Strömungsmitteleinlaßöffnung (A) verbindet.

5. Lamellenventilvorrichtung nach irgendeinem vorangehenden Anspruch, worin die genannte Strömungsmitteleinlaßöffnung (A) und die genannte Strömungsmittelauslaßöffnung (C) in derselben Richtung ausgerichtet sind.

6. Lamellenventilvorrichtung nach irgendeinem der Ansprüche 1 bis 4, worin die genannte Strömungsmitteleinlaßöffnung (A) und die genannte Strömungsmittelauslaßöffnung (C) in orthogonalen Richtungen ausgerichtet sind.

7. Lamellenventilvorrichtung nach irgendeinem vorangehenden Anspruch, worin das Innere des genannten unteren Gehäuses (10) in zwei Abschnitte unterteilt ist, und worin ein Paar der genannten Auslaßöffnungen (C) vorgesehen sind, um mit den genannten beiden Abschnitten in Verbindung zu stehen.

## Revendications

1. Dispositif à soupape à lame souple pourvu d'une soupape de commande d'air comportant :
un boîtier supérieur comprenant un cylindre extérieur (2) pourvu d'un orifice (A) d'entrée de fluide, et un cylindre intérieur (3) disposé dans ledit cylindre extérieur (2), un intervalle entre les extrémités inférieures desdits cylindres extérieur (2) et intérieur (3) étant fermé ;
un boîtier inférieur (10) pourvu d'un orifice (C) de sortie de fluide ;
une soupape (9) à lame souple placée entre ledit boîtier supérieur (1) et ledit boîtier inférieur (10), l'intérieur dudit boîtier supérieur (1) et l'intérieur dudit boîtier inférieur (10) pouvant communiquer à travers ladite soupape (9) à lame souple ;
un diaphragme (5) placé sur les extrémités supérieures desdits cylindres extérieur (2) et intérieur (3) ;
un élément de capot (6) dans lequel est formé un orifice à pression de signal et placé sur ledit diaphragme (5), ledit diaphragme (5) étant serré par sa partie de bord périphérique entre ledit élément de capot (6) et ledit cylindre extérieur (2) ;
un ressort hélicoïdal (8) disposé entre ledit élément de capot (6) et ledit diaphragme (5) de façon à rappeler ledit diaphragme (5) en contact d'appui sur un siège (4) de soupage constitué par l'extrémité supérieure dudit cylindre intérieur (3) ;
dans lequel une pression de signal appliquée audit orifice (B) de pression de signal produit une force pour déformer ledit diaphragme (5) contre la force de rappel dudit ressort hélicoïdal (8) à l'écart dudit siège (4) de soupage afin de permettre à un fluide introduit à travers ledit orifice (A) d'entrée de fluide d'atteindre ladite soupape (9) à lame souple à travers l'espace entre lesdits cylindres extérieur (2) et intérieur (3) et à travers l'intérieur dudit cylindre intérieur (3) ;
caractérisé en ce qu'un filtre (18) est disposé dans la partie du passage de fluide définie entre lesdits cylindres extérieur (2) et intérieur (3) faisant face audit orifice (A) d'entrée de fluide.

2. Dispositif à soupape à lame souple selon la revendication 1, comportant en outre une cloison (19) qui relie ledit cylindre extérieur (2) et ledit cylindre intérieur (3) pour amener un fluide provenant dudit orifice d'entrée (A) à s'écouler horizontalement.

3. Dispositif à soupape à lame souple selon la revendication 2 dans lequel la surface supérieure dudit filtre (18) est en contact avec ladite cloison (19) de manière que le fluide provenant de l'orifice (A) d'entrée s'écoule horizontalement à travers le filtre (18).

4. Dispositif à soupape à lame souple selon la revendication 2 ou la revendication 3, dans lequel ladite cloison (19) présente une forme de secteur et est prévue pour relier lesdits cylindres extérieur (2) et intérieur (3) sur le même côté que ledit orifice (A) d'entrée de fluide et à un niveau situé au-dessus dudit orifice (A) d'entrée de fluide.

5. Dispositif à soupape à lame souple selon l'une quelconque des revendications précédentes, dans lequel ledit orifice (A) d'entrée de fluide et ledit orifice (C) de sortie de fluide sont orientés dans la même direction.

6. Dispositif à soupape à lame souple selon l'une quelconque des revendications 1 à 4, dans lequel ledit orifice (A) d'entrée de fluide et ledit orifice (C) de sortie de fluide sont orientés dans des directions orthogonales.

7. Dispositif à soupape à lame souple selon l'une quelconque des revendications précédentes, dans lequel l'intérieur dudit boîtier inférieur (10) est divisé en deux parties et dans lequel deux desdits orifices (C) de sortie sont prévus de façon à correspondre auxdites deux parties.
